# EUROPÄISCHE PATENTSCHRIFT

(11) **EP 1 536 169 B1**
(45) Veröffentlichungstag und Bekanntmachung des Hinweises auf die Patenterteilung: **05.11.2008**
(21) Anmeldenummer: 03027541.6
(22) Anmeldetag: 29.11.2003
(51) Int. Cl.: F16K 31/06

(54) **Elektromagnetisches Ventil**
Electromagnetic valve
Soupape électromagnétique

(43) Veröffentlichungstag der Anmeldung: 01.06.2005
(73) Patentinhaber: Asco Joucomatic GmbH, 75248 Ölbronn-Dürrn (DE)
(72) Erfinder: Ams, Felix, 75236 Kämpfeldbach (DE); Siedentopf, Klaus, 75245 Neulingen (DE)
(74) Vertreter: Kratzsch, Volkhard

(56) Entgegenhaltungen:
- WO-A-01/36243
- DE-A- 10 039 066
- GB-A- 2 189 010
- US-A1- 2002 139 953

## Beschreibung

Die Erfindung betrifft eine Vorrichtung zur Regelung eines fluiden oder gasförmigen Mediums der im Oberbegriff des Anspruchs 1 angegebenen Gattung.

Eine bekannte Regelungsvorrichtung dieser Art mit einem 2/2-Wegeventil (DE 100 39 066 A1 ) weist ein Ventilgehäuse mit einem Ventileingang und Ventilausgang auf, die über eine Ventilkammer miteinander in Verbindung stehen. In der Ventilkammer ist ein eine Ventilöffnung umschließender Ventilsitz ausgebildet, der zur Durchflussregelung des Mediums von einem Ventilglied beherrscht wird, das durch mehr oder weniger weites Abheben vom Ventilsitz die durch die Ventilöffnung strömende Durchflussmenge bestimmt. Die Steuerung des Ventilglieds erfolgt mittels eines Elektromagneten, der eine Ankerhülse und eine auf der Ankerhülse sitzende Erregerwicklung oder Magnetspule aufweist. In der Ankerhülse ist ein Ankerstopfen oder Gegenanker fest angeordnet und ein Anker verschieblich geführt, der über einen Übertragungsstößel starr mit dem Ventilglied verbunden ist. Der Anker gleitet mit einem Gleitring an der Innenwand der Ankerhülse. Der Übertragungsstößel ist in einem in der Ankerhülse festgelegten Gleitlager geführt. Dadurch soll eine präzise, spielarme Bewegung des Ankers erreicht werden. Das Ventilglied wird im Schließzustand des Ventils durch eine Ventilschließfeder auf den Ventilsitz aufgepresst. Die Ventilschließfeder stützt sich einerseits am Anker und andererseits an einer in den Gegenanker eingeschraubten Justierschraube ab, mittels der die Vorspannung der Ventilschließfeder eingestellt werden kann. Die einander zugekehrten Enden von Anker und Gegenanker sind konisch ausgebildet und greifen ineinander, wodurch die zwischen Anker und Gegenanker wirkende Magnetkraft unabhängig vom Hub des Ankers ist.

Es ist ein direktwirkendes 2/2-Wege-Proportional- bzw. Stetig-Ventil in Gestalt eines Hubanker-Magnetventils bekannt (Thomas Sattler: "Wo Gase dosiert werden", MSR Magazin 12/2002, S. 38), bei dem der Anker durch Magnetkraft gegen eine Feder angezogen wird und direkt auf den Ventilsitz wirkt. Statt Gleitringen kommen Formfedern zum Einsatz, so dass selbst in dieser Größenordnung keine nennenswerte Reibung auftritt. Beide Formfedern übernehmen die Führung des Ankers, lediglich jedoch die obere Feder dessen Rückstellung. Diese obere Feder soll somit zugleich auch die Dichtheit des Ventils im Schließzustand herbeiführen und sicherstellen. Dementsprechend ist die Federkraft zu dimensionieren.

Der Erfindung liegt die Aufgabe zugrunde, eine Vorrichtung zur Regelung eines fluiden oder gasförmigen Mediums der eingangs genannten Art so zu verbessern, dass eine extrem reibungsarme und präzise Führung des Ankers in der Ankerhülse unter Beibehaltung einer zuverlässigen Dichtheit des Ventils im Schließzustand erreicht wird.

Die Aufgabe ist erfindungsgemäß durch die Merkmale im Anspruch 1 gelöst.

Die erfindungsgemäße Regelungsvorrichtung hat den Vorteil, dass durch die Halterung mit minimalem Radialspiel des Ankers mittels mindestens zweier Flachfedern der Anker über seinen Gesamthub hinweg die Innenwand der Ankerhülse an keiner Stelle berührt. Gleichzeitig wird durch die Ventilschließfeder eine dichte Auflage des Ventilglieds auf dem Ventilsitz sichergestellt.

Zweckmäßige Ausführungsformen der erfindungsgemäßen Regelungsvorrichtung mit vorteilhaften Weiterbildungen und Ausgestaltungen der Erfindung sind in den weiteren Ansprüchen angegeben.

Gemäß einer vorteilhaften Ausführungsform der Erfindung liegt die vorzugsweise als konische Schrauben-Druckfeder ausgebildete Ventilschließfeder in einem in den Anker eingebrachten, zentralen Sackloch ein und stützt sich einerseits am Sacklochboden und andererseits an einer Justiereinrichtung zur Einstellung ihrer Vorspannung ab. Die Justiereinrichtung umfasst in vorteilhafter Weise einen Justierstift, der im Ankerstopfen verschraubbar ist und an seinem freien Stirnende einen Zentrierzapfen und eine den Zentrierzapfen umgebende Auflageschulter für die Ventilschließfeder aufweist. Durch die konische Ausbildung der Ventilschließfeder tritt beim Ankerhub keine Reibung zwischen der Ventilschließfeder und der Lochwand des Sacklochs auf, wodurch die Reibungsarmut des Ankers beim Hub noch zusätzlich gesteigert wird.

Gemäß einer vorteilhaften Ausführungsform der Erfindung greift jeweils mindestens eine Flachfeder an einem Stirnende des Ankers radial spiellos an. Dabei ist vorteilhaft die eine Flachfeder in einer in der Stirnseite des Ankers eingebrachten konzentrischen Ausnehmung formschlüssig eingelegt und am Justierstift der Justiereinrichtung zentriert. Die Flachfeder liegt ausschließlich mit ihrem äußeren Randbereich auf einer in der Ausnehmung ausgebildeten Ringschulter auf und wird auf der Ringschulter mittels eines in die Ausnehmung eingesetzten Niederhalters, durch den der Justierstift der Justiereinrichtung hindurchgeführt ist, festgespannt. Die Flachfeder weist eine Zentralöffnung auf, in die der am Justierstift ausgebildete Führungszapfen formschlüssig hineinragt, wobei die Flachfeder mit ihrem die Zentralöffnung umgebenden Randbereich auf der Auflageschulter am Justierstift aufliegt und von der Ventilschließfeder festgespannt wird. Bei Betätigung der Justiereinrichtung wird zusammen mit der Vorspannung der Schließfeder auch die axiale Vorspannung der Flachfeder variiert.

In einer alternativen Ausführungsform ist auf den Führungszapfen eine Zentrierhülse aufgeschoben, die formschlüssig in die Zentralöffnung der Flachfeder eingreift und von der Ventilschließfeder auf die Auflageschulter des Justierstifts aufgepresst wird. Die Flachfeder liegt mit ihrem die Zentralöffnung umschließenden Randbereich am Niederhalter an. Bei dieser Ausführung wird bei Einstellung der Schließkraft der Ventilschließfeder mittels des Justierstiftes die axiale Vorspannung der Flachfeder nicht verändert.

Gemäß einer vorteilhaften Ausführungsform der Erfindung liegt mindestens eine weitere Flachfeder in einer im Ventilgehäuse konzentrisch zum Ventilsitz angeordneten Aufnahme formschlüssig ein und ist auf der in die Aufnahme eintauchenden Stirnseite des Ankers zentriert und vorzugsweise zwischen dem unmittelbar an der Stirnseite des Ankers befestigten Ventilglied und dem Anker eingespannt. Um einen großen Federweg der Flachfeder zu erhalten, liegt in letzterem Fall die Flachfeder nur mit einem zentralen Bereich auf einer gegenüber der Stirnseite des Ankers axial vorstehenden Ringschulter auf, während der äußere Randbereich der Flachfeder auf einer in der Aufnahme radial vorstehenden Ringschulter aufliegt. Die Flachfeder kann aber auch mit einer Zentralöffnung über einen am Stirnende des Ankers vorstehenden, sich konisch verjüngenden Bund zentriert und von dem Ventilglied festgelegt sein.

In einer vorteilhaften Ausführungsform der Erfindung ist die Aufnahme von einer in das Ventilgehäuse eingebrachten Ausnehmung gebildet. Die Ankerhülse taucht mit einem Endabschnitt in die Ausnehmung ein und spannt die Flachfeder auf der Ringschulter fest.

In einer alternativen Ausführungsform der Erfindung ist die Aufnahme von einer im Endabschnitt der Ankerhülse verschraubbaren Aufnahmehülse gebildet, wobei die Ankerhülse wiederum mit ihrem Endabschnitt in eine im Ventilgehäuse ausgebildete Ausnehmung eintaucht, in der Ausnehmung aber drehbar festgelegt ist. Durch Drehen der Ankerhülse relativ zu der im Ventilgehäuse undrehbar gehaltenen Aufnahmehülse verschiebt sich infolge des Schraubgewindes zwischen Aufnahmehülse und Ankerhülse die Aufnahmehülse in Axialrichtung, wodurch die axiale Vorspannung der Flachfeder eingestellt werden kann.

In einer bevorzugten Ausführungsform der Erfindung weist das Ventilglied einen Dichtungshalter und eine vom Dichtungshalter aufgenommene Dichtplatte auf, die mit dem Ventilsitz kommuniziert. Der Dichtungshalter ist vorzugsweise mit einem Zapfen in ein zentrales Sackloch eingepresst, das von der Stirnseite des Ankers aus eingebracht ist. Ebenso wie bei einer einstückigen Ausführung von Ankerhülse und Ankerstopfen werden hierdurch Fertigungsvorteile erzielt.

Gemäß einer vorteilhaften Ausführungsform der Erfindung ist eine Verstellvorrichtung zur Einstellung des Ankerhubs vorgesehen. Eine solche Verstellvorrichtung wird in einfacher Weise durch eine Gewindeverbindung zwischen der im Ventilgehäuse ausgebildeten Ausnehmung und dem in die Ausnehmung eintauchenden Endabschnitt der Ankerhülse realisiert. Durch Drehen der Ankerhülse wird diese mehr oder weniger axial verschoben, wodurch sich der Abstand zwischen Anker und Ankerstopfen variieren lässt.

Die Erfindung ist anhand von in der Zeichnung dargestellten Ausführungsbeispielen im folgenden näher beschrieben. Es zeigen:
- Fig. 1: einen Längsschnitt einer Vorrichtung zur Regelung eines fluiden oder gasförmigen Mediums,
- Fig. 2: eine gleiche Darstellung wie in Fig. 1 einer modifizierten Regelungsvorrichtung,
- Fig. 3: ausschnittweise eine gleiche Darstellung wie in Fig. 1 einer Regelungsvorrichtung gemäß einem weiteren Ausführungsbeispiel,
- Fig. 4: eine Draufsicht einer Flachfeder in der Regelungsvorrichtung gemäß Fig. 1, 2 oder 3.

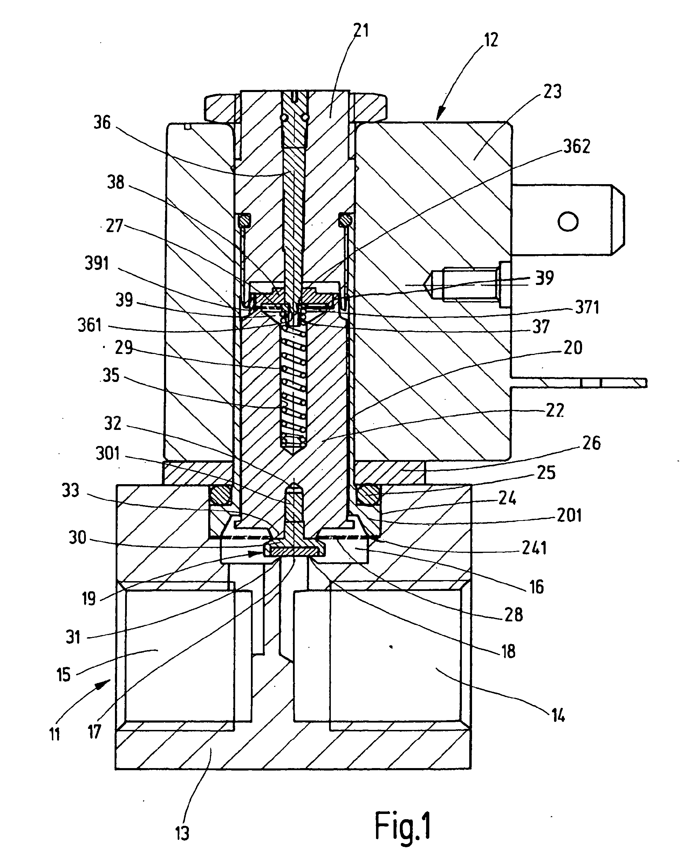

Die in Fig. 1 im Längsschnitt dargestellte Vorrichtung zur Regelung eines fluiden oder gasförmigen Mediums weist ein 2/2-Wegeventil 11 und einen Elektromagneten 12 zur Betätigung des 2/2-Wegeventils 11 auf. Das 2/2-Wegeventil 11 besitzt ein Ventilgehäuse 13 mit einem Ventileinlass 14 und einem Ventilauslass 15, die über eine Ventilkammer 16 miteinander in Verbindung stehen. In der Ventilkammer 16 ist eine Ventilöffnung 17 ausgebildet, die von einem Ventilsitz 18 umschlossen ist, der zur Durchflussregelung des Mediums mit einem Ventilglied 19 zusammenwirkt, das durch mehr oder weniger weites Abheben vom Ventilsitz 18 die über die Ventilöffnung 17 strömende Durchflussmenge bestimmt. Die Steuerung des Ventilglieds 19 wird mittels des Elektromagneten 12 bewirkt, der vorzugsweise ein Proportionalverhalten aufweist.

Der Elektromagnet 12 besitzt eine Ankerhülse 20, in der ein Ankerstopfen 21 angeordnet und ein dem Ankerstopfen 21 axial gegenüberliegender Anker 22 axial verschieblich aufgenommen ist. Ankerhülse 20 und Ankerstopfen 21 können einstückig miteinander ausgeführt sein. Die Ankerhülse 20 ist von einer Erregerwicklung oder Magnetspule 23 umschlossen, die an der Ankerhülse 20 axial unverschieblich festgelegt ist. Die einander zukehrten Enden von Anker 22 und Ankerstopfen 21 sind konisch ausgebildet und greifen ineinander, wodurch die zwischen Anker 22 und Ankerstopfen 21 wirkende Magnetkraft unabhängig vom Hub des Ankers 22 ist.

Die Ankerhülse 20 taucht mit einem Endabschnitt 201 in eine im Ventilgehäuse 13 eingebrachte, durchmessergestufte Ausnehmung 24 ein, deren durchmesserkleinerer, unterer Bereich die Ventilkammer 16 bildet. Der Endabschnitt 201 liegt in dem durchmessergrößeren, oberen Bereich der Ausnehmung 24 und stützt sich auf einer durch die Durchmesserstufung in der Ausnehmung 24 gebildeten Ringschulter 241 ab. Der Endabschnitt 201 der Ankerhülse 20 ist gegenüber der Ausnehmung 24 mittels eines Dichtungsrings 25 abgedichtet. Die Ankerhülse 20 ist am Ventilgehäuse 13 mittels eines über die Ankerhülse 20 geschobenen Befestigungsrings 26 befestigt, der den Dichtungsring 25 radial übergreift und diesen an eine am Endabschnitt 201 ausgebildete, äußere Ringschulter anpresst. Der Befestigungsring 26 ist am Ventilgehäuse 13, z.B. durch Schweißen, Verschrauben od. dgl., festgelegt.

Der Anker 22 ist mittels zweier Flachfedern 27, 28 in der Ankerhülse 20 so gehalten, dass er mit minimalem Radialspiel berührungslos in der Ankerhülse 20 einliegt und axial verschiebbar ist, ohne dabei die Innenwand der Ankerhülse 20 zu berühren. Die eine Flachfeder 27 ist am oberen Stirnende und die andere Flachfeder 28 am unteren Stirnende des Ankers 22 angeordnet. Am unteren Stirnende des Ankers 22 ist das Ventilglied 19 befestigt. Das Ventilglied 19 weist einen Dichtungshalter 30 mit einem daran einstückig angeformten Zapfen 301 und eine in dem Dichtungshalter 30 aufgenommene Dichtplatte 31 auf, die mit dem Ventilsitz 18 zusammenwirkt. Zur Reduzierung der Fertigungskosten ist der Dichtungshalter 30 mit seinem Zapfen 301 in ein in die Stirnseite des Ankers 22 eingebrachtes Sackloch 32 eingepresst. An der Stirnseite des Ankers 22 ist ein zum Sackloch 32 konzentrischer Bund 33 angeformt, der als Kegelstumpf ausgeführt ist, der sich zum freien Ende hin verjüngt. Zwischen dem Bund 33 und dem Dichtungshalter 30 ist die eine Flachfeder 28 eingeklemmt.

Die Dichtheit zwischen der Dichtplatte 31 und dem Ventilsitz 18 im Schließzustand des Ventils 11 wird durch eine Ventilschließfeder 29 herbeigeführt. Die Ventilschließfeder 29 ist in ein Sackloch 35 eingesetzt, das von dem dem Ankerstopfen 21 zugekehrten Stirnende des Ankers 22 aus in den Anker 22 eingebracht ist. Die als Schraubendruckfeder ausgebildete Ventilschließfeder 29 stützt sich einerseits am Lochgrund des Sacklochs 35 und andererseits an einem Justierstift 36 einer Justiereinrichtung zum Einstellen der Vorspannkraft der Ventilschließfeder 29 ab. Am Stirnende des Justierstiftes 36 ist ein axial vorstehender Führungszapfen 361 ausgebildet, der von einer radialen Auflageschulter 362 ringförmig umgeben ist. Auf den Führungszapfen 361 ist eine Zentrierhülse 37 aufgeschoben, die mit einem Flansch 371 an der Auflageschulter 362 anliegt. Das dem Justierstift 36 zugekehrte Ende der Ventilschließfeder 29 ist auf der Zentrierhülse 37 geführt und stützt sich an dem Flansch 371, diesen gegen die Auflageschulter 362 pressend, ab. Der Justierstift 36 ist im Ankerstopfen 21 verschraubbar, so dass durch Drehen des Justierstiftes 36 die Ventilschließfeder 29 mehr oder weniger komprimiert werden kann. Der Justierstift 36 tritt mit seinem aus dem Verschlussstopfen 21 herausragenden, freien Ende durch einen Niederhalter 38 hindurch, der in eine in der Stirnseite des Ankers 22 eingebrachte, konzentrische Ausnehmung 39 eintaucht und dort auf einer in der Ausnehmung 39 ausgebildeten Ringschulter 391 aufliegt.

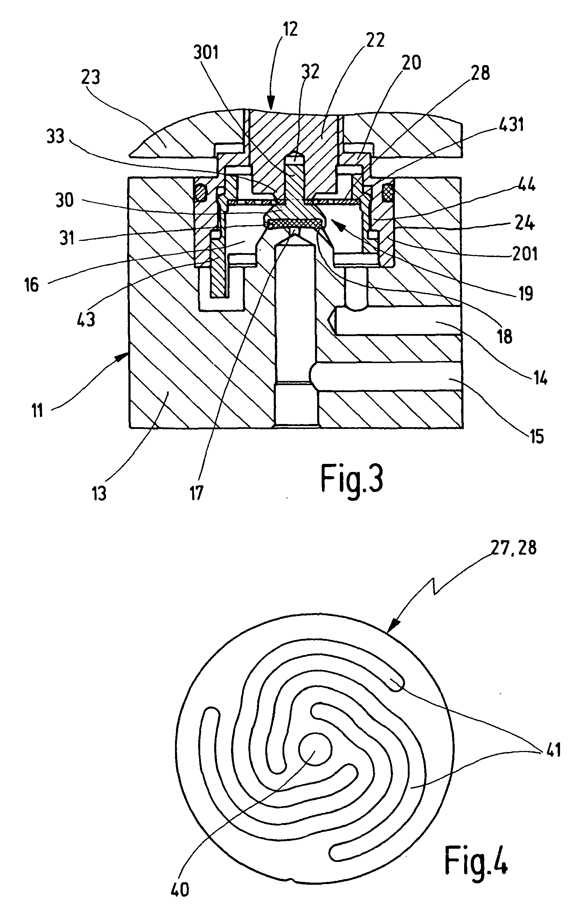

Die obere und untere Flachfeder 27, 28 sind mit unterschiedlichem Durchmesser gleichartig ausgebildet. Ein Ausführungsbeispiel der Flachfedern 27, 28 ist in Fig. 4 in Draufsicht dargestellt. Jede Flachfeder 27, 28 ist beispielsweise aus Federblech mit einer Materialstärke von 0,05 - 0,3 mm gefertigt und mit einer Zentralöffnung 40 versehen. Des weiteren sind in der Flachfeder 27 bzw. 28 spiralartig verlaufende Aussparungen 41 mit unterschiedlichem Radialabstand eingearbeitet. Die Flachfeder 27 weist einen kleineren Durchmesser als die Flachfeder 28 auf und ist in die Ausnehmung 39 im Anker 22 formschlüssig eingelegt, so dass sie keine radiale Relativbewegung zum Anker 22 ausführen kann. Ihr äußerer Randbereich liegt auf der in der Ausnehmung 39 ausgebildeten Ringschulter 391 auf und wird von dem Niederhalter 38 festgespannt. In der Zentralöffnung 40 liegt formschlüssig der Flansch 371 der Zentrierhülse 37 ein und zentriert die Flachfeder 27 am Justierstift 36. Die durchmessergrößere, untere Flachfeder 28 ist in die Ausnehmung 24 im Ventilgehäuse 13 formschlüssig eingelegt und liegt mit ihrem äußeren Randbereich auf der Ringschulter 241 der Ausnehmung 24 auf und wird durch die Ankerhülse 20 auf der Ringschulter 241 festgespannt. Die Flachfeder 28 ist mit ihrer Zentralöffnung 40 auf dem konisch ausgeführten Bund 33 aufgesetzt und von dem Dichtungshalter 30 gegen Abziehen gesichert, so dass die Flachfeder 28 auf der Mantelfläche des Bundes 33 zentriert ist. In einer alternativen Ausführung kann der die Zentralöffnung 40 umgebende Randbereich der Flachfeder 28 auf der ringförmigen Stirnfläche des Bundes 33 aufliegen, und der Zapfen 301 des Dichtungshalters 30 formschlüssig durch die Zentralöffnung 40 hindurchtreten, so dass die Flachfeder 28 einerseits am Zapfen 301 des Dichtungshalters 30 zentriert ist und andererseits zwischen dem Anker 22 und dem Dichtungshalter 30 festgespannt ist.

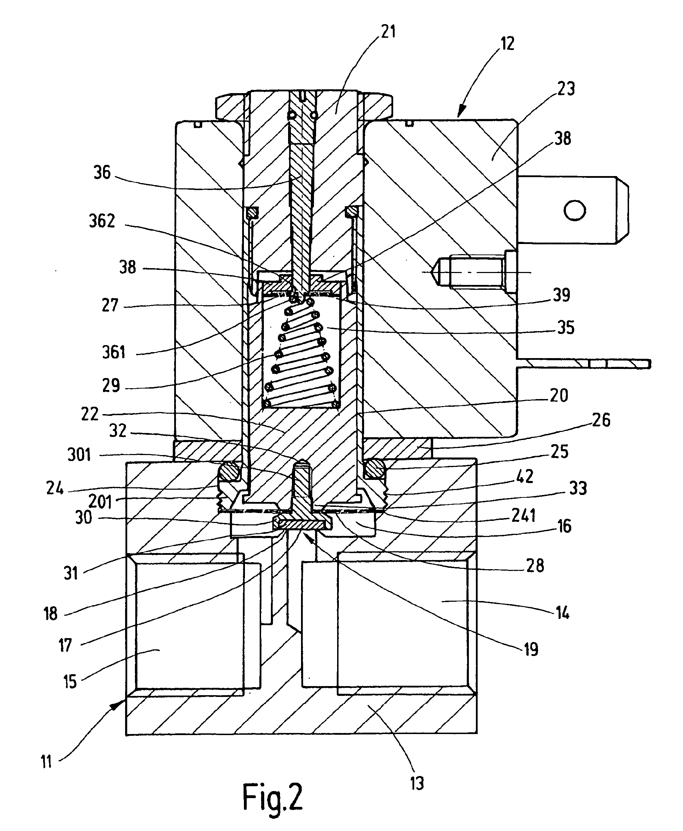

In dem in Fig. 2 dargestellten Ausführungsbeispiel ist die Regelungsvorrichtung insoweit modifiziert, als dass das in den Anker 22 eingebrachte Sackloch 35 zur Aufnahme der Ventilschließfeder 29 mit einem wesentlich größeren Durchmesser ausgeführt ist und zugleich die Ausnehmung 39 zur Aufnahme der oberen Flachfeder 27 und des Niederhalters 38 bildet. Das Sackloch 35 verjüngt sich zumindest im Bereich der Ausnehmung 39 in Richtung Lochgrund. In diesem konischen Bereich liegt der Niederhalter 38 und die sich mit ihrem äußeren Randbereich an einem Ringbund an der Unterseite des Niederhalters 38 abstützende Flachfeder 27 formschlüssig ein. Die Flachfeder 27 liegt mit ihrem die Zentralöffnung 40 umschließenden, inneren Randbereich an der Auflageschulter 362 des Justierstiftes 36 an und wird von dem Führungszapfen 361 des Justierstiftes 36 zentriert. Die Ventilschließfeder 39 ist als Konusfeder ausgebildet, die sich nach unten erweitert und sich über die obere Flachfeder 27 an der Auflageschulter 362 am Justierstift 36 abstützt. Durch diese konstruktiven Maßnahmen wirkt die Verstelleinrichtung zum Einstellen der Vorspannung der Ventilschließfeder 29 auch auf die obere Flachfeder 27 und verändert deren axiale Vorspannkraft mit. Durch die Konusform der Ventilschließfeder 29 wird Reibung zwischen der Ventilschließfeder 29 und der Lochwand des Sacklochs 35 vermieden.

Des weiteren ist in der Regelungsvorrichtung gemäß Fig. 2 noch eine Verstelleinrichtung zur Verstellung des Ankerhubs vorgesehen. Diese besteht im einfachsten Fall aus einem Schraubgewinde 42 zwischen der im Ventilgehäuse 13 vorhandenen Ausnehmung 24 und dem Endabschnitt 201 der Ankerhülse 20. Die Ankerhülse 20 kann sich durch Drehen in der Ausnehmung 24 axial verschieben, so dass der Abstand zwischen dem Ankerstopfen 21 einerseits und dem Anker 22 bzw. dem vorzugsweise aus nichtmagnetischem Material bestehenden Niederhalter 38 andererseits und damit der Hub des Ankers 22 verändert werden kann.

Bei dem in Fig. 3 ausschnittweise dargestellten Ausführungsbeispiel ist die Regelungsvorrichtung insofern modifiziert, als noch zusätzlich eine Verstelleinrichtung zur Verstellung der axialen Vorspannung der unteren Flachfeder 28 vorgesehen ist. Die Ankerhülse 20 ist wiederum mit ihrem Endabschnitt 201 in die im Ventilgehäuse 13 vorhandene Ausnehmung 24 dicht eingesetzt, ist aber in der Ausnehmung 24 um ihre Hülsenachse drehbar angeordnet. In dem Endabschnitt 201 der Ankerhülse 20 ist eine Aufnahmehülse 43 mittels eines Gewindes 44 verschraubbar. In der Aufnahmehülse 43 ist eine radiale Ringschulter 431 ausgebildet, auf der die untere Flachfeder 28 mit ihrem äußeren Randbereich aufliegt. Die Flachfeder 28 ist hier über ihre Zentralöffnung 40 mittels des Zapfens 301 des Dichtungshalters 30 am Anker 22 zentriert und mit ihrem die Zentralöffnung 40 umschließenden Randbereich zwischen dem Dichtungshalter 30 und der ringförmigen Stirnfläche des Bundes 33 am Anker 22 eingespannt. Wird die Ankerhülse 20 nunmehr so gedreht, dass sich die Aufnahmehülse 43, die in der Ausnehmung 39 undrehbar gehalten ist, durch das Gewinde 44 nach unten schraubt, so wird der äußere Rand der unteren Flachfeder 28 durch die Ringschulter 431 an der Aufnahmehülse 43 nach unten gedrückt, so dass sich die axiale Vorspannkraft der unteren Flachfeder 28 vergrößert. Eine geeignet gerichtete Vorspannung der Flachfedern 27, 28 kann zur Unterstützung des Öffnungshubs oder zur Erhöhung der Dichtschließkraft des Ventilglieds 19 herangezogen werden.

## Patentansprüche

1. Vorrichtung zur Regelung eines fluiden oder gasförmigen Mediums, mit einem Ventilgehäuse (13), das einen Ventilein- und -auslass (14, 15) aufweist, die über eine von einem Ventilsitz (18) umschlossene Ventilöffnung (17) miteinander in Verbindung stehen, mit einem mit dem Ventilsitz (18) zur Durchflussregelung des Mediums durch die Ventilöffnung (17) zusammenwirkenden Ventilglied (19) und mit einem Elektromagneten (12), der einen mit dem Ventilglied (19) verbundenen Anker (22), eine den Anker (22) und einen Ankerstopfen (21) aufnehmende Ankerhülse (20) und eine die Ankerhülse (20) umschließende Magnetspule (23) aufweist, wobei der Anker (22) über mindestens zwei Federn so gehalten ist, dass er in der Ankerhülse (20) berührungslos axial verschiebbar einliegt und eine Feder zum Aufsetzen des Ventilglieds (19) auf den Ventilsitz (18) dient,
**dadurch gekennzeichnet,**
**dass** am Anker (22) eine vorgespannte Ventilschließfeder (29) zum Aufsetzen des Ventilglieds (19) auf den Ventilsitz (18) angreift, dass am Anker (22) mindestens zwei Flachfedern (27, 28), von denen mindestens eine Flachfeder (27) an einem Stirnende und mindestens eine andere Flachfeder (28) am anderen Stirnende des Ankers (22) angeordnet ist, angreifen und dass jeder Flachfeder (27, 28) eine Einstellvorrichtung zur Einstellung der axialen Federvorspannung zugeordnet ist.

2. Vorrichtung nach Anspruch 1, **dadurch gekennzeichnet, dass** die Ventilschließfeder (29) in einem in den Anker (22) eingebrachten, zentralen Sackloch (35) einliegt und sich einerseits am Sacklochboden und andererseits an einer Auflageschulter (362) abstützt, die an einem im Ankerstopfen (21) verschraubbaren Justierstift (36) einer Justiereinrichtung zur Einstellung der Vorspannkraft der Ventilschließfeder (29) ausgebildet ist, und dass ein vom Justierstift (36) abstehender, von der Auflageschulter (362) umgebener Führungszapfen (361) in die vorzugsweise als konisch sich zum Sacklochboden hin aufweitende Schraubendruckfeder ausgebildete Ventilschließfeder (29) eintaucht.

3. Vorrichtung nach einem der Ansprüche 1 oder 2, **dadurch gekennzeichnet, dass** mindestens eine Flachfeder (27) in einer in die dem Ankerstopfen (21) zugekehrte Stirnseite des Ankers (22) eingebrachten, konzentrischen Ausnehmung (39) formschlüssig einliegt und am Justierstift (36) zentriert ist.

4. Vorrichtung nach einem der Ansprüche 1 bis 3, **dadurch gekennzeichnet, dass** mindestens eine Flachfeder (27) randseitig auf einer in der Ausnehmung (39) ausgebildeten Ringschulter (391) aufliegt und auf der Ringschulter (391) mittels eines in die Ausnehmung (39) eingesetzten Niederhalters (38) festgespannt ist, durch den der Justierstift (36) hindurchgeführt ist.

5. Vorrichtung nach einem der Ansprüche 1 bis 4, **dadurch gekennzeichnet, dass** mindestens eine Flachfeder (27) eine Zentralöffnung (40) aufweist, die von dem Führungszapfen (361) des Justierstiftes (36) oder einer auf den Führungszapfen (361) aufgeschobenen Zentrierhülse (37) formschlüssig durchsetzt ist, und dass die Flachfeder (27) mit ihrem die Zentralöffnung (40) umgebenden Randbereich auf der Auflageschulter (362) des Justierstiftes (36) und/oder an dem Niederhalter (38) anliegt.

6. Vorrichtung nach einem der Ansprüche 1 bis 5, **dadurch gekennzeichnet, dass** mindestens eine Flachfeder (28) in einer im Ventilgehäuse (13) konzentrisch zum Ventilsitz (18) angeordneten Aufnahme formschlüssig einliegt und auf der in die Aufnahme eintauchenden Stirnseite des Ankers (22) zentriert ist und vorzugsweise zwischen dem am Anker (22) befestigten Ventilglied (19) und dem Anker (22) eingespannt ist.

7. Vorrichtung nach Anspruch 6, **dadurch gekennzeichnet, dass** in der Aufnahme eine radial vorstehende Ringschulter (241; 431) ausgebildet ist, auf der die Flachfeder (28) mit ihrem äußeren Randbereich aufliegt.

8. Vorrichtung nach Anspruch 7, **dadurch gekennzeichnet, dass** die Aufnahme von einer in das Ventilgehäuse (13) eingebrachten Ausnehmung (24) gebildet ist und dass die Flachfeder (28) auf der Ringschulter (241) mittels der mit einem Endabschnitt (201) in die Ausnehmung (24) eintauchenden Ankerhülse (20) festgespannt ist.

9. Vorrichtung nach Anspruch 7, **dadurch gekennzeichnet, dass** die Ankerhülse (20) mit einem Endabschnitt (201) drehbar in eine im Ventilgehäuse (13) ausgebildete Ausnehmung (24) eintaucht und dass die Aufnahme mit Ringschulter (431) von einer in dem Endabschnitt (201) der Ankerhülse (20) verschraubbaren, im Ventilgehäuse (13) undrehbar gehaltenen Aufnahmehülse (43) gebildet ist.

## Claims

1. Device for regulating a fluid or gaseous medium, having a valve housing (13) which has a valve inlet and outlet (14, 15) which are connected to one another by means of a valve opening (17) which is surrounded by a valve seat (18), having a valve element (19) which interacts with the valve seat (18) so as to regulate the throughflow of the medium through the valve opening (17), and having an electromagnet (12) which has an armature (22) which is connected to the valve element (19), an armature sleeve (20) which holds the armature (22) and an armature plug (21), and a magnet coil (23) which surrounds the armature sleeve (20), with the armature (22) being held by means of at least two springs such that it lies in the armature sleeve (20) without contact and in an axially movable manner, and one spring serves to set the valve element (19) down on the valve seat (18),
**characterized**
**in that** a preloaded valve closing spring (29) for setting the valve element (19) down on the valve seat (18) engages on the armature (22), in that at least two flat springs (27, 28), of which at least one flat spring (27) is arranged at one face end and at least one other flat spring (28) is arranged at the other face end of the armature (22), engage on the armature (22), and in that each flat spring (27, 28) is assigned an adjusting device for adjusting the axial spring preload.

2. Device according to Claim 1, **characterized in that** the valve closing spring (29) lies in a central blind hole (35) which is formed in the armature (22), and said valve closing spring (29) is supported at one side on the blind hole base and at the other side on a rest shoulder (362) which is formed on an adjusting pin (36), which can be screwed in the armature plug (21), of an adjusting device for adjusting the preload force of the valve closing spring (29), and **in that** a guide journal (361) which projects from the adjusting pin (36) and which is surrounded by the rest shoulder (362) protrudes into the valve closing spring (29) which is embodied preferably as a coil pressure spring which widens conically in the direction of the blind hole base.

3. Device according to one of Claims 1 or 2, **characterized in that** at least one flat spring (27) lies in a form-fitting manner in a concentric recess (39) which is formed in the face side, which faces towards the armature plug (21), of the armature (22), and said flat spring (27) is centred on the adjusting pin (36).

4. Device according to one of Claims 1 to 3, **characterized in that** at least one flat spring (27) rests at the edge side on an annular shoulder (391) which is formed in the recess (39), and said flat spring (27) is fixedly clamped on the annular shoulder (391) by means of a retainer (38) which is inserted into the recess (39) and through which the adjusting pin (36) is guided.

5. Device according to one of Claims 1 to 4, **characterized in that** at least one flat spring (27) has a central opening (40) through which the guide journal (361) of the adjusting pin (36), or a centring sleeve (37) which is pushed onto the guide journal (361), extends in a form-fitting manner, and **in that** the flat spring (27) bears, with its edge region which surrounds the central opening (40), on the rest shoulder (362) of the adjusting pin (36) and/or on the retainer (38).

6. Device according to one of Claims 1 to 5, **characterized in that** at least one flat spring (28) lies in a form-fitting manner in a receptacle which is arranged, concentrically with respect to the valve seat (18), in the valve housing (13), and said flat spring (28) is centred on the face side, which protrudes into the receptacle, of the armature (22), and is preferably clamped between the valve element (19), which is fastened to the armature (22), and the armature (22).

7. Device according to Claim 6, **characterized in that** a radially projecting annular shoulder (241; 431) is formed in the receptacle, on which annular shoulder (241; 431) the flat spring (28) rests with its outer edge region.

8. Device according to Claim 7, **characterized in that** the receptacle is formed by a recess (24) which is formed into the valve housing (13), and **in that** the flat spring (28) is fixedly clamped on the annular shoulder (241) by means of the armature sleeve (20) which protrudes with an end section (201) into the recess (24).

9. Device according to Claim 7, **characterized in that** the armature sleeve (20) protrudes with an end section (201) in a rotatable fashion into a recess (24) which is formed in the valve housing (13), and **in that** the receptacle with the annular shoulder (431) is formed by a receptacle sleeve (43) which can be screwed in the end section (201) of the armature sleeve (20) and which is held in a non-rotatable fashion in the valve housing (13).

## Revendications

1. Dispositif de régulation d'un milieu fluide ou gazeux, comprenant un boîtier de soupape (13) qui présente une entrée et une sortie de soupape (14, 15), qui sont en liaison l'une avec l'autre par le biais d'une ouverture de soupape (17) entourée par un siège de soupape (18), comprenant un organe de soupape (19) coopérant avec le siège de soupape (18) pour la régulation du débit du milieu à travers l'ouverture de soupape (17), et comprenant un électroaimant (12) qui présente une armature (22) connectée à l'organe de soupape (19), une gaine d'armature (20) recevant l'armature (22) et un bouchon d'armature (21), et une bobine magnétique (23) entourant la gaine d'armature (20), l'armature (22) étant maintenue par le biais d'au moins deux ressorts de telle sorte qu'elle s'insère de manière déplaçable axialement sans contact dans la gaine d'armature (20) et un ressort servant à positionner l'organe de soupape (19) sur le siège de soupape (18),
**caractérisé en ce qu'**
un ressort de fermeture de soupape précontraint (29) vient en prise au niveau de l'armature (22) pour positionner l'organe de soupape (19) sur le siège de soupape (18), **en ce que** sur l'armature (22) s'engagent au moins deux ressorts plats (27, 28), dont au moins un (27) est disposé à une extrémité frontale et au moins un autre ressort plat (28) est disposé à l'autre extrémité frontale de l'armature (22), et **en ce que** chaque ressort plat (27, 28) est associé à un dispositif d'ajustement pour ajuster la précontrainte axiale du ressort.

2. Dispositif selon la revendication 1, **caractérisé en ce que** le ressort de fermeture de soupape (29) s'insère dans un trou borgne central (35) pratiqué dans l'armature (22), et s'appuie d'une part contre le fond du trou borgne et d'autre part contre un épaulement d'appui (362), qui est réalisé sur une broche d'ajustage (36) d'un dispositif d'ajustage, pouvant être vissée dans le bouchon d'armature (21), pour l'ajustement de la force de précontrainte du ressort de fermeture de soupape (29), et **en ce qu'**un tourillon de guidage (361) saillant depuis la broche d'ajustage (36), entouré par l'épaulement d'appui (362), plonge dans le ressort de fermeture de soupape (29) réalisé de préférence sous forme de ressort à boudin de pression s'élargissant vers le fond du trou borgne.

3. Dispositif selon l'une quelconque des revendications 1 ou 2, **caractérisé en ce qu'**au moins un ressort plat (27) s'insère par engagement par coopération de forme dans un évidement (39) concentrique pratiqué dans un côté frontal de l'armature (22) tourné vers le bouchon d'armature (21), et est centré sur la broche d'ajustage (36).

4. Dispositif selon l'une quelconque des revendications 1 à 3, **caractérisé en ce qu'**au moins un ressort plat (27) s'applique du côté du bord sur un épaulement annulaire (391) réalisé dans l'évidement (39) et est serré fermement sur l'épaulement annulaire (391) au moyen d'un serre-flan (38) inséré dans l'évidement (39), à travers lequel la broche d'ajustage (36) est guidée.

5. Dispositif selon l'une quelconque des revendications 1 à 4, **caractérisé en ce qu'**au moins un ressort plat (27) présente une ouverture centrale (40) qui est traversée avec engagement par coopération de forme par le tourillon de guidage (361) de la broche d'ajustage (36) ou par une gaine de centrage (37) poussée sur le tourillon de guidage (361), et **en ce que** le ressort plat (27) s'applique avec sa région de bord entourant l'ouverture centrale (40) sur l'épaulement d'appui (362) de la broche d'ajustage (36) et/ou sur le serre-flan (38).

6. Dispositif selon l'une quelconque des revendications 1 à 5, **caractérisé en ce qu'**au moins un ressort plat (28) s'insère par engagement par coopération de forme dans un logement disposé concentriquement au siège de soupape (18) dans le boîtier de soupape (13) et est centré sur le côté frontal de l'armature (22) plongeant dans le logement, et est de préférence serré entre l'organe de soupape (19) fixé à l'armature (22) et l'armature (22).

7. Dispositif selon la revendication 6, **caractérisé en ce qu'**il est réalisé dans le logement un épaulement annulaire (241 ; 431) saillant radialement, sur lequel s'applique le ressort plat (28) avec sa région de bord extérieure.

8. Dispositif selon la revendication 7, **caractérisé en ce que** le logement est formé par un évidement (24) pratiqué dans le boîtier de soupape (13), et **en ce que** le ressort plat (28) est serré fermement sur l'épaulement annulaire (241) au moyen de la gaine d'armature (20) plongeant avec une portion d'extrémité (201) dans l'évidement (24).

9. Dispositif selon la revendication 7, **caractérisé en ce que** la gaine d'armature (20) plonge avec une portion d'extrémité (201) de manière rotative dans un évidement (24) réalisé dans le boîtier de soupape (13), et **en ce que** le logement avec l'épaulement annulaire (431) est formé par une gaine de logement (43) pouvant être vissée dans la portion d'extrémité (201) de la gaine d'armature (20) et maintenue de manière non rotative dans le boîtier de soupape (13).
